# EUROPEAN PATENT SPECIFICATION

(11) **EP 2 114 146 B1**
(45) Date of publication and mention of the grant of the patent: **08.02.2012**
(21) Application number: 07867697.0
(22) Date of filing: 10.12.2007
(51) Int. Cl.: A01N 31/02, A01N 31/04, A01P 1/00

(54) **CHROMATOGRAPHIC MEDIA AND CHROMATOGRAPHIC EQUIPMENT STORAGE SOLUTIONS AND USE THEREOF**
LAGERUNGSLÖSUNGEN FÜR CHROMATOGRAPHISCHE MEDIEN UND CHROMATOGRAPHISCHE EINRICHTUNGEN UND VERWENDUNG DAVON
SUPPORT CHROMATOGRAPHIQUE ET SOLUTIONS DE STOCKAGE D'EQUIPEMENT CHROMATOGRAPHIQUE, ET LEUR UTILISATION

(30) Priority: 01.02.2007 US 887671 P
(43) Date of publication of application: 11.11.2009
(73) Proprietor: Avantor Performance Materials, Inc., Phillipsburg NJ 08865 (US)
(72) Inventor: DEORKAR, Nandu, Cedar Knolls, New Jersey 07927 (US); MAGEE, Steve, Bethlehem, Pennsylvania 18017 (US)
(74) Representative: Westwood, Joanna
(86) International application number: PCT/US2007/025261
(87) International publication number: WO 2008/094237

(56) References cited:
- EP-A- 0 948 892
- WO-A-2006/081002
- US-A- 4 695 453

## Description

### FIELD OF THE INVENTION

This invention relates to a composition that is stable and suitable for storage of chromatographic media and chromatographic equipment for extended periods of time, e.g., for up to about two years or more. The invention also relates to methods of preparation and use of novel solutions for making liquid-solid suspensions that inhibit bacterial growth and kill bacteria. The invention also discloses composition or solutions for making liquid-solid suspensions and storing such suspensions.

### BACKGROUND TO THE INVENTION

Chromatographic analysis is one of the commonly used analytical techniques for determining the properties, components and/or characteristics of various materials. However, although chromatographic analysis has been widely adopted one problem that has arisen is the problem of the media and equipment utilized in such chromatographic analysis becoming impure or infected with bacterial matter, particularly when the chromatographic media and chromatographic equipment are subjected to storage, particularly long term storage when not being utilized. The prior art has not offered any effective solution to the problem of safe and effective storage of chromatographic media and chromatographic equipment, especially for long term storage.

Various solutions such as phosphoric acid (0.01-0.5N), hydrochloric acid (0.1-0.5N), NaOH (0.1-2N) and alcohol (ethanol or isopropanol at minimum 20% v/v in water) are widely used for bacterial inhibition. However, these solutions are highly acidic or basic or carry some environmental and handling risks and are not compatible with chromatographic media and chromatographic equipment. Under current practice, if sodium hydroxide (0.1 M-0.5 M) or acids (0.1 M-0.5 M) are used, they need to be first neutralized either by using acid or base, respectively, followed by washing with sufficient water to remove excess salt. If 20% or higher concentrations of alcohol (ethanol or isopropyl alcohol) are needed for bactericidal effect, it requires proper organic handling and disposal. In addition to the above solutions, some solution compositions containing buffer of pH 5.0 or lower and 1.0% benzyl alcohol have been used for storage of some chromatographic media. However, due to reduced stability of the chromatographic media at low pH, low pH formulations are not suitable for long-term storage. Benzyl alcohol is an antimicrobial preservative against gram positive bacteria and is used in cosmetics, foods and a wide range of pharmaceutical formulations although it possesses only modest bactericidal properties with optimal activity known to occur below pH 5.0 as noted in Karabit, M. S., Juneskans, O. T. and Lundgren, P. Journal of Clinical and Hospital Pharmacy (1986) 11, 281-289; and R.C. Rowe, P.J. Sheskey and P.J. Weller, Handbook of Pharmaceutical Excipients, 4th edition American Pharmaceutical Association, (2003) 53-55. In addition, the activity of benzyl alcohol has been shown to be reduced by incompatibilities with some packaging materials such as methylcellulose, polyethylene, polystyrene, natural rubber, neoprene and butyl rubber and the like, as stated in R.C. Rowe, P.J. Sheskey and P.J. Weller, Handbook of Pharmaceutical Excipients, 4th edition, American Pharmaceutical Association (2003), 53-55 and M.S. Roberts et. al, Int. J. Pharm. (1979) 2, 295-306].

Thus, there remains a clear need for an acceptable composition or solution that will allow for safe and effective storage of chromatographic media and chromatographic equipment with no or essentially minimalized risk of bacterial infection of the media or equipment occurring. There is especially a need for a composition or solution that will allow for safe and effective storage of chromatographic media and chromatographic equipment for an extended period of time, e.g., about two or more years time, with no or essentially minimalized risk of bacterial infection of the media or equipment occurring.
WO 2006/081002 describes the preservation of chromatographic solids with either of ethyl or benzyl alcohols.

### SUMMARY OF THE INVENTION

It has been unexpectedly discovered that by employing compositions of antimicrobial solutions one can provide solutions with essentially neutral pH, generally from about pH 5.5 to 7.5, preferably a pH of about 6.0 to about 7.5, that are compatible with chromatographic solids, such as chromatographic supports or media and chromatographic equipment, and that such solutions maintain microbial killing and inhibition properties. The compositions or solutions of this invention comprise buffered anti-microbial solutions of about 1.5% to about 4% benzyl alcohol, about 0.5% to about 4% ethyl alcohol and generally from about 92% to about 98% of about 50 mM to about 200 mM buffer to provide solutions at pH of about 5.5 to about 7.5, wherein the percentages are percent by weight. In such solutions chromatographic solids, such as media, supports and equipment; can be safely stored for short or extended periods of time without undue risk of bacterial infection of the media, support or equipment occurring. The solutions of this invention can kill bacteria and inhibit bacterial growth in the presence of solids when chromatographic media, supports or equipment are stored in these solutions for short or long periods of time. Another feature of this invention is that it provides such solutions that are neither highly basic nor acidic and that do not contain large (high percentage) of organic solvent. Additionally, the solutions of this invention are inert to commonly used chromatographic media and equipment materials of construction. Moreover, the solutions of this invention are of low toxicity and are environmentally friendly.

A preferred composition includes 100 mM sodium phosphate-acetate buffer to provide a solution of pH 6.0-pH 7.0 containing 2% benzyl alcohol and 2% ethanol. This solution can be used for storage of chromatographic media based on silica or polymeric beads. The liquid-solid suspension made using the chromatographic media and said solution is shown to kill *E*. *coli* and *C*. *albicans* within 2 hours and *A. niger* within 24 hours while maintaining solutions bacteria free for extended times. In addition, this solution is also shown to kill various microbes present on the solid support such as chromatographic media and maintain it bacteria free over the long term. Since this solution is highly inert and nontoxic, it permits usual operations such as packing chromatographic columns or equipment cleaning. In addition, the solution components can be easily removed from surfaces such as chromatographic media or equipment surfaces by washing with water, other buffers or dilute acids such as acetic acid (1.0%) which are normally used in the chromatographic operations.

### DETAILED DESCRIPTION OF THE INVENTION AND PREFERRED EMBODIMENTS

A purpose of the invention is to prepare solutions that can kill bacteria and inhibit bacterial growth in presence of chromatographic solids when the solution or chromatographic solids are stored in this solution for short to long term. Another purpose of the invention is to provide a solution that is not highly acidic or basic, does not contain high amounts of organic solvent, is inert, i.e., does not damage commonly used chromatographic media and equipment materials of construction, is of low toxicity and environmentally friendly.

The invention relates to providing novel solutions for making liquid-solid suspensions that inhibit microbial growth and kill microbial flora. More particularly this invention relates to storage of chromatographic solids, particularly chromatographic media in containers or chromatographic process columns. The invention process comprises providing antimicrobial buffer solution containing about 1.5 to about 4% benzyl alcohol, about 0.5 to about 4% ethyl alcohol, about 92 to about 98% about 50 mM to about 200 mM buffer solution of pH of about 5.5 to about 7.5. Another aspect of the invention comprises storing of chromatographic solids for short or long periods of time in such antimicrobial buffer solutions. This is accomplished, for example, by mixing about 1 part of chromatographic media with about 1-4 parts of antimicrobial buffer solution in a container or another aspect of the invention is storing the antimicrobial slurry of the chromatographic media in the antimicrobial buffer solution in a closed container or in a chromatographic column until next use.

The buffered antimicrobial solution can be made by mixing buffer solution with ethanol and benzyl alcohol. In a preferred embodiment, the benzyl alcohol is first mixed with the ethanol and then adding the buffer to provide the desired pH of from about 5.5 to 7.5. Examples of various suitable buffering agents that may be employed include, but are not limited to, sodium citrate, sodium acetate, sodium phosphate, triethanolamine, tris(hydromethyl)aminomethane (TRIS), HEPES (N-(2-hydroxyethyl)piperizine-N'-(2-ethanesulphonate)), and MES (4-morpholineethanesulphonate).

The preferred antimicrobial composition of this invention is about 2% ethanol, about 2% benzyl alcohol and about 96% about 100 mM sodium phosphate (dibasic) titrated to pH 6.0 with acetic acid in water. The antimicrobial solution or chromatographic solids-buffered solution slurry stored in polypropylene containers is shown to maintain its antimicrobial efficacy and chemical composition for at least 2 years.

The antimicrobial solution and its use for storage of chromatographic media render it very suitable for industrial use from small to large scale. The antimicrobial solution of this invention uses benzyl alcohol that is generally regarded as safe (GRAS) along with less than 4% ethyl alcohol which makes it easy to handle and that is readily disposed. In addition, the benzyl alcohol can easily be removed from the chromatographic media by either washing with generally used chromatographic buffers such as in the concentration range of about 10 mM to about 1 M in the pH range of 3.0 to 9.0. For example TRIS, HEPES, MES, sodium acetate, sodium citrate and sodium phosphate can be used. Alternatively, dilute acetic acid (0.01 M to 0.5 M) can also be used for removal of antimicrobial solution and components from the chromatographic solids such as chromatographic media.

The materials and methods used in this disclosure of the invention are as follows:

### Test microbes.

Microbes used in the various assays were obtained from American Type Culture Collection (ATCC), 10810 University Blvd., Manassas, VA 20110-2209. The following microbes were obtained: *Candida albicans* (ATCC # 10231), *Aspergillus niger* (ATCC # 16404), *Staphylococcus aureus* (ATCC # 6538) and *Escherichia coli* (ATCC # 8739). Cultures of *C. albicans* were maintained on 2% Yeast Malt Agar (YMA) (Sigma Chemical Co. # Y3127). Cultures of *A. niger* were maintained on 2% Potato Dextrose Agar (PDA) (Sigma Chemical Co. # P2182). Cultures of *S*. *aureus* and *E. coli* were maintained on 2% Nutrient Agar (NA) (Sigma Chemical Co. # N0394). All cultures were kept at room temperature or at 5-10° C until needed and were periodically (approximately weekly) streaked onto fresh sterile plates of media.

Antimicrobial effect determination by colony-forming unit method.
A single colony of any given microbe was picked with a sterile loop and transferred to sterile water or 1X phosphate buffered saline and diluted to approx. 10,000 colony-forming units (CFU's) per mL. To 5 mL of a test antimicrobial solution (or sterile water or 0.1-1.0 X phosphate buffered saline to serve as a CONTROL) was added 0.1 mL of approx. 10,000 CFU/mL culture and mixed briefly by gentle vortexing. At various times, 0.1-1.0 mL of inoculated antimicrobial solution was transferred to the center of an empty sterile plate and 15 mL of sterile media (agar) held at 45-50° C was added and thoroughly mixed. The media added for each respective microbe was the same as that used for maintaining the cultures. Plates were held at room temperature for 20-45 minutes then transferred to an incubator maintained at 34-37° C where they were held for 4 days. Periodically, the plates were examined for growth and colonies were counted. Typically, colonies were apparent in 24 hours and counted at 24, 48 and 72 hours. Usually the counts at 48 and 72 hours were identical. As a 2^{nd} CONTROL, a sample of test antimicrobial solution (0.1-1.0 mL) with no microbes added was added to the center of a sterile plate and 0.1 mL of the CONTROL culture of the microbe in question at 1,000-2,000 CFU's/mL added to the plate at a distance of at least 2 cm from the test sample. As before, 15 mL of sterile media (agar) of choice for that microbe held at 45-50° C was added and thoroughly mixed. This served to determine if the presence of the test components were inhibiting growth on the plate rather than killing the microbes in the inoculated antimicrobial solution.

### EXAMPLES

### Example 1. Various buffering compositions

Buffers of various types and concentrations (0.02-1.0 M) were titrated to pH's of 5.0-7.5 with appropriate acids or bases then ethanol and benzyl alcohols were added to give 2% each. Representative buffers were sodium acetate (acetic acid titrated with sodium hydroxide), acetate-triethanolamine (acetic acid titrated with triethanolamine), sodium phosphate-acetic acid (sodium phosphate, dibasic, titrated with acetic acid) and sodium phosphate (sodium phosphate, monobasic, titrated with sodium hydroxide). Typically, the buffering agent of choice was made up at 1.1-1.3 times the desired concentration and titrated to the desired pH then diluted with water to give the desired concentration. The oH's remained the same as the undiluted stock. To a 100 mL volumetric flask was added 2.0 +/- 0.02 grams benzyl alcohol and 2 +/- 0.01 grams ethanol, and then the buffering solution was added. On some occasions, the final solution was filtered through a sterile 0.2 micron filter into a sterile flask to render it assuredly sterile. This was found to not be generally necessary as several trials with solutions containing 1% or greater concentrations of benzyl alcohol and other sterilants (with or without ethanol present) indicated that 24 hour incubation was sufficient to render the solution free of endogenous microbes. The test was begun by transferring 5 mL of the test solution into a sterile glass tube and adding 0.1 mL of microbial culture, mixing well and maintaining at room temperature (20-23° C) for an appropriate amount of time of about 1 to 24 hours to allow bacterial growth or killing then transferring 0.1-1.0 mL to sterile plates. To each of the plates was then added 15 mL of appropriate bacterial growth media at 45-55° C and the media mixed well with the test culture. Colony formation was determined after appropriate incubation at 34-37° C for 48-72 hours. It was found that the type of buffer seemed to have little influence on the rate of killing microbes but the concentration and pH was often important. Concentrations required to give substantial increase in killing rates were generally over 0.1 M. Also, more microbes were killed at pH's below 5.5 than at pH's higher than 5.5.

### Example 2. Antimicrobial and killing using antimicrobial solution at pH 4.0-7.5

Buffer compositions were made by titrating 0.025 M sodium phosphate, dibasic, with glacial acetic acid to various pH's in 0.5 pH unit increments. To a 100 mL volumetric flask was added 2.0 +/- 0.02 grams benzyl alcohol and 2 +/- 0.01 grams ethanol, then filled to the mark with 0.025 M sodium phosphate-acetic acid at a given pH. The pH remained the same as buffer alone +/- 0.09 pH units. These mixtures were left at room temperature for at least 24 hours to allow elimination of endogenous microbes, which were typically 0, anyway. These solutions were tested by adding active cultures of microbes to 5 mL of test solution and incubating for an appropriate amount of time at room temperature. Samples of the test mixture were periodically plated with the appropriate media for the microbe in question and grown for 72-96 hours at 33-37° C. Although the killing rate at pH 4.5 and below was considerably faster than at pH 5.5-7.5, the pH 4.5 acidic solution was not acceptably stable and is detrimental to the chromatographic media whereas the killing rate at pH 5.5-6.5 was acceptable, requiring about 24 hours to eliminate >95% of the active *A*. *niger* cells and less than 2 and 4 hours to kill 100% of the active *E*. *coli* and *C. albicans* cells, respectively, yet was not detrimental to the chromatographic media and such solutions of about pH 5.5 to 6.5 were stable.

### Example 3. Antimicrobial effect in slurry of chromatographic media

Buffer compositions were made by titrating 0.025 M sodium phosphate, dibasic, with glacial acetic acid to various pH's. To a 100 mL volumetric flask was added either 1.5 +/- 0.2 or 2.0 +/- 0.02 grams benzyl alcohol and either 1.5 +/- 0.2 or 2 +/- 0.01 grams ethanol, then filled to the mark with 0.025 M sodium phosphate-acetic acid at a given pH. The pH remained the same as buffer alone +/- 0.09 pH units. These mixtures were left at room temperature for at least 24 hours to allow elimination of endogenous microbes, which were typically 0, anyway. Meanwhile, approximately 3.1 packed mL of Protein A - silica media that had been stored in 25 mM sodium phosphate-acetic acid, pH 6, containing 2% benzyl alcohol and 2% ethanol at room temperature for 48 hours was centrifuged briefly and the supernatant siphoned off. The packed pellet was suspended in 15 mL 0.2 micron filtered water and centrifuged to form a pellet and the supernatant siphoned off. This was repeated 3 more times with filtered water then repeated 3 more times with sterile (autoclaved) water. The pellet of Protein A-silica media was suspended in sterile (autoclaved) water to give a suspension volume of 8 mL. To each of several test solutions was transferred 0.25 mL of the suspended sorbent representing approximately 0.1 mL of packed Protein A-silica media sorbent. Other tubes received only 0.25 mL of sterile water. Tubes were then "spiked" with a microbial culture and left at room temperature for various periods of time whereupon a sample was plated out for counting live cells as described above. Both *E*. *coli* and *C. albicans* were killed to less than 1 % of the starting count while *A*. *niger* required up to 90 hours for 100% killing. However, there was no detectable difference between killing rates in the presence or absence of the sorbent.

### Example 4. Antimicrobial effect vs. time

An antimicrobial solution was made by titrating 10 mM acetic acid with NaOH to pH 6 then adding NaCl to 25 mM and benzyl alcohol and ethanol each to 2 % as above. Live cultures were added as a "spike" and periodically live cells counted. After storing the solution for month, the microbial killing potential was still the same when tested with *S*. *aureus.*

### Example 5. Antimicrobial solution stability

A solution of 10 mM acetic acid-NaOH-25 mM NaCl-2% benzyl alcohol-2% ethanol, pH 5.5, was stored for 22 months in high density polyethylene bottles with no detectable loss (less than 1% of its original concentration) of benzyl alcohol based on absorbancies measured at 257 nm in water-diluted solutions.

### Example 6. Antimicrobial solution stability in presence of chromatographic media

Solutions of 2% each of benzyl alcohol and ethanol were made in 25 mM sodium phosphate, dibasic, and titrated to pH 6 with acetic acid. Solutions were kept at room temperature and at 5-8° C for 4 months in polypropylene bottles and tested for benzyl alcohol concentration and for bactericidal capacity with *E. coli* using the antimicrobial effect determination by colony forming unit method. There was no detectable loss of benzyl alcohol nor loss of bactericidal capacity in the 4 months.

### Example 7. Stability of chromatographic media stored in antimicrobial solutions.

Bakerbond™ XWP 500 PolyABx-35 (500Å) (#7586-02, Lot A24804) chromatographic media was rinsed several times with 100 mM sodium acetate-acetic acid, pH 5, containing 2% benzyl alcohol and 2% ethanol then suspended in an equal volume of the same benzyl alcohol-ethanol-buffer combination. The suspension was left at room temperature for 2 years. The benzyl alcohol lost less than 2% of its original concentration based on absorbance assays and was found to have lost no detectable bactericidal potency when assayed by the antimicrobial effect determination by colony forming unit method. The sorbent was periodically tested for capacity and resolution of test proteins and found to demonstrate no significant changes for up to 2 years. The capacity of PolyABX-35 was measured by breakthrough method using rabbit gamma globulin. At the same conditions the 10% breakthrough capacity at zero months was 54.5 mg/ml of resin and after twenty four months was 54mg/ml indicating no significant change in breakthrough capacity.

### Example 8. Stability of affinity chromatographic media stored in antimicrobial solutions.

Protein A bonded silica chromatographic media was rinsed several times with 100 mM sodium acetate-acetic acid, pH 6, containing 2% benzyl alcohol and 2% ethanol then suspended in an equal volume of the same benzyl alcohol-ethanol-buffer combination. The suspension was left at 4-8°C for 4 months. The benzyl alcohol lost less than 2% of its original concentration based on absorbance assays and was found to have lost no detectable bactericidal potency when assayed by the antimicrobial effect determination by colony forming unit method. Further, the affinity media lost ligand from the resin to the liquid media at a much slower rate at pH 6 and higher than the rate at pH's lower than 6. The ligand leakage was measured with an enzyme-linked immunospecific assay (ELISA). The Leakage of Protein A detected by ELISA assays into the media at pH 5.0 was 2-3 times greater than at pH 6.0 and nearly 15 times greater at pH 4.5 than at pH 6.0.

## Claims

1. A buffered antimicrobial solution for storage of chromatographic solids, wherein the buffered anti-microbial solution comprises from 1.5% to 4% by weight benzyl alcohol, 0.5% to 4% by weight ethyl alcohol and from 92% to 98% by weight of 50 mM to 200 mM buffer to provide a solution at pH of 5.5 to 7.5.

2. A buffered antimicrobial solution according to claim 1 wherein the pH is pH 6.0.

3. A buffered antimicrobial solution according to claim 1 wherein the amount of benzyl alcohol is 2% by weight and the amount of ethyl alcohol is 2% by weight.

4. A buffered antimicrobial solution according to claim 1 wherein the buffer is selected from sodium citrate, sodium acetate, sodium phosphate, triethanolamine, TRIS (tris(hydromethyl)aminomethane), HEPES (N-(2-hydroxyethyl)piperizine-N'-(2-ethanesulphonate), and MES (4-morpholineethanesulphonate).

5. A buffered antimicrobial solution according to claim 1 comprising 2% by weight benzyl alcohol, 2% by weight ethyl alcohol and 96% by weight 100 mM sodium phosphate dibasic titrated to pH 6.0.

6. A method of storing a chromatographic solid while preventing microbial infection of the solid comprising retaining the chromatographic solid in a buffered antimicrobial solution according to any preceding claim.

7. A method according to claim 6 wherein the chromatographic solid is selected from chromatographic media or chromatographic equipment.

8. A method according to claim 7 wherein the chromatographic solid is chromatographic media.

9. A method according to claim 6 for storing the chromatographic solid for a period of up to two years.

10. A method according to claim 9 wherein the chromatographic solid is chromatographic media.

11. A method according to claim 10 wherein the chromatographic solid is chromatographic media.

12. A product comprising a chromatographic solid and a buffered antimicrobial solution, wherein the buffered antimicrobial solution comprises from 1.5% to 4% by weight benzyl alcohol, 0.5% to 4% by weight ethyl alcohol and from 92% to 98% by weight of 50 mM to 200 mM buffer to provide a solution at pH of 5.5 to 7.5.

13. A product according to claim 12 wherein the chromatographic solid is selected from chromatographic media or chromatographic equipment.

14. A product according to claim 12 wherein the buffered antimicrobial solution comprises 2% by weight benzyl alcohol, 2% by weight ethyl alcohol and 96% by weight 100 mM sodium phosphate dibasic titrated to pH 6.0.

## Patentansprüche

1. Gepufferte antimikrobielle Lösung zum Aufbewahren von chromatographischen Feststoffen, wobei die gepufferte antimikrobielle Lösung von 1,5 bis 4 Gew.-% Benzylalkohol, von 0, 5 bis 4 Gew.-% Ethylalkohol und von 92 bis 98 Gew.-% 50 mM bis 200 mM Puffer umfasst, um eine Lösung mit einem pH-Wert von 5,5 bis 7,5 bereitzustellen.

2. Gepufferte antimikrobielle Lösung nach Anspruch 1, wobei der pH-Wert 6,0 ist.

3. Gepufferte antimikrobielle Lösung nach Anspruch 1, wobei die Menge Benzylalkohol 2 Gew.-% und die Menge Ethylalkohol 2 Gew.-% ist.

4. Gepufferte antimikrobielle Lösung nach Anspruch 1, wobei der Puffer ausgewählt ist aus Natriumcitrat, Natriumacetat, Natriumphosphat, Triethanolamin, TRIS (Tris(hydroxymethyl)-aminomethan), HEPES (N-(2-Hydroxyethyl)-piperizin-N'-(2-ethansulfonat) und MES (4-Morpholinethansulfonat).

5. Gepufferte antimikrobielle Lösung nach Anspruch 1, umfassend 2 Gew.-% Benzylalkohol, 2 Gew.-% Ethylalkohol und 96 Gew.-% 100 mM dibasisches Natriumphosphat, wobei der pH-Wert auf 6,0 eingestellt ist.

6. Verfahren zum Aufbewahren eines chromatographischen Feststoffs, während eine mikrobielle Infektion des Feststoffs verhindert wird, umfassend Aufbewahren des chromatographischen Feststoffs in einer gepufferten antimikrobiellen Lösung nach einem der vorherigen Ansprüche.

7. Verfahren nach Anspruch 6, wobei der chromatographische Feststoff ausgewählt ist aus einem chromatographischen Medium oder chromatographischem Equipment.

8. Verfahren nach Anspruch 7, wobei der chromatographische Feststoff ein chromatographisches Medium ist.

9. Verfahren nach Anspruch 6 zum Aufbewahren des chromatographischen Feststoffs für einen Zeitraum von bis zu zwei Jahren.

10. Verfahren nach Anspruch 9, wobei der chromatographische Feststoff ein chromatographisches Medium ist.

11. Verfahren nach Anspruch 10, wobei der chromatographische Feststoff ein chromatographisches Medium ist.

12. Produkt, umfassend einen chromatographischen Feststoff und eine gepufferte antimikrobielle Lösung, wobei die gepufferte antimikrobielle Lösung von 1,5 bis 4 Gew.-% Benyzlalkohol, von 0, 5 bis 4 Gew.-% Ethylalkohol und von 92 bis 98 Gew.-% 50 mM bis 200 mM Puffer umfasst, um eine Lösung mit einem pH-Wert von 5,5 bis 7,5 bereitzustellen.

13. Produkt nach Anspruch 12, wobei der chromatographische Feststoff aus einem chromatographischen Medium oder chromatographischem Equipment ausgewählt ist.

14. Produkt nach Anspruch 12, wobei die gepufferte antimikrobielle Lösung 2 Gew.-% Benzylalkohol, 2 Gew.-% Ethylalkohol und 96 Gew.-% 100 mM dibasisches Natriumphosphat umfasst, wobei der pH-Wert auf 6,0 eingestellt ist.

## Revendications

1. Solution antimicrobienne tamponnée pour le stockage de solides chromatographiques, la solution antimicrobienne tamponnée comprenant de 1,5 % à 4 % en poids de benzyle alcool, 0,5 % à 4 % en poids d'alcool éthylique et de 92 % à 98 % en poids de tampon de 50 mM à 200 mM pour donner une solution de pH 5,5 à 7,5.

2. Solution antimicrobienne tamponnée selon la revendication 1, dans laquelle le pH est pH 6,0.

3. Solution antimicrobienne tamponnée selon la revendication 1, dans laquelle la quantité de benzyle alcool est de 2 % en poids et la quantité d'alcool éthylique est de 2 % en poids.

4. Solution antimicrobienne tamponnée selon la revendication 1, dans laquelle le tampon est choisi parmi le citrate de sodium, l'acétate de sodium, le phosphate de sodium, la triéthanolamine, le TRIS (tris(hydrométhyl)aminométhane), l'HEPES (N-(2-hydroxyéthyl)pipérizine-N'-(2-éthanesulfonate) et le MES (4-morpholine-éthanesulfonate).

5. Solution antimicrobienne tamponnée selon la revendication 1, comprenant 2 % en poids de benzyle alcool, 2 % en poids d'alcool éthylique et 96 % en poids de phosphate de sodium dibasique 100 mM titré à pH 6,0.

6. Procédé de stockage d'un solide chromatographique prévenant l'infection microbienne du solide comprenant la conservation du solide chromatographique dans une solution antimicrobienne tamponnée selon l'une quelconque des revendications précédentes.

7. Procédé selon la revendication 6, dans lequel le solide chromatograhique est choisi parmi les milieux chromatographiques ou un équipement chromatographique.

8. Procédé selon la revendication 7, dans lequel le solide chromatographique est un milieu chromatographique.

9. Procédé selon la revendication 6, pour le stockage du solide chromatographique pendant une durée allant jusqu'à deux ans.

10. Procédé selon la revendication 9, dans lequel le solide chromatographique est un milieu chromatographique.

11. Procédé selon la revendication 10, dans lequel le solide chromatographique est un milieu chromatographique.

12. Produit comprenant un solide chromatographique et une solution antimicrobienne tamponnée, dans lequel la solution antimicrobienne tamponnée comprend de 1,5 % à 4 % en poids de benzyle alcool, 0,5 % à 4 % en poids d'alcool éthylique et de 92 % à 98 % en poids de tampon de 50 mM à 200 mM pour donner une solution de pH 5,5 à 7,5.

13. Produit selon la revendication 12, dans lequel le solide chromatographique est choisi parmi les milieux chromatographiques ou un équipement chromatographique.

14. Produit selon la revendication 12, dans lequel la solution antimicrobienne combinée comprend 2 % en poids de benzyle alcool, 2 % en poids d'alcool éthylique et 96 % en poids de phosphate de sodium dibasique 100 mM titré à pH 6,0.
